# EUROPÄISCHE PATENTSCHRIFT

(11) **EP 2 773 499 B1**
(45) Veröffentlichungstag und Bekanntmachung des Hinweises auf die Patenterteilung: **28.03.2018**
(21) Anmeldenummer: 12783520.5
(22) Anmeldetag: 19.10.2012
(51) Int. Cl.: B29C 70/52

(54) **VERFAHREN ZUR HERSTELLUNG EINES VERSTÄRKTEN KUNSTSTOFFGEGENSTANDS**
PROCESS FOR PRODUCING A REINFORCED PLASTIC ARTICLE
PROCÉDÉ POUR RÉALISER UN OBJET EN MATIÈRE PLASTIQUE RENFORCÉ

(30) Priorität: 01.11.2011 DE 102011117296
(43) Veröffentlichungstag der Anmeldung: 10.09.2014
(73) Patentinhaber: Thomas GmbH + Co. Technik + Innovation KG, 27432 Bremervörde (DE)
(72) Erfinder: JANSEN, Klaus, 21614 Buxtehude (DE)
(74) Vertreter: Möller, Friedrich
(86) Internationale Anmeldenummer: PCT/EP2012/004389
(87) Internationale Veröffentlichungsnummer: WO 2013/064216

(56) Entgegenhaltungen:
- WO-A1-2008/116560
- US-A- 3 391 422

## Beschreibung

Die Erfindung betrifft ein Verfahren zur Herstellung eines verstärkten Kunststoffgegenstands gemäß dem Oberbegriff des Anspruchs 1.

Kunststoffgegenstände, insbesondere Kunststoffprofile, mit einer durchgehenden Verstärkung aus in vorzugsweise duroplastischem Kunststoff eingebetteten Strängen, Fasern, Geweben und/oder Gewirken werden überwiegend durchgehend, das heißt kontinuierlich, als Kunststoffstrang hergestellt oder aus mindestens einem Kunststoffstrang gebildet. Dieses geschieht bevorzugt im Pultrusionsverfahren. Dazu wird die Verstärkung durch eine Form hindurchgeführt und in der Form die Verstärkung im flüssigen Kunststoff eingebettet. Die Form verlässt einen mindestens teilweise ausgehärteten Kunststoffstrang mit dem von der Form vorgegebenen Profil.

Üblicherweise werden im Pultrusionsverfahren gerade, strangförmige Kunststoffprofile hergestellt. Wie in WO 2008/116560 A1 beschrieben, sind aber auch Pultrusionsverfahren bekannt, die es zulassen, gekrümmte Kunststoffprofile als Kunststoffstrangprofile herzustellen. Hinsichtlich der Komplexität insbesondere gekrümmter Kunststoffprofile stoßen bekannte Pultrusionsverfahren an technische Grenzen. Dadurch sind technisch komplexe Kunststoffgegenstände im Pultrusionsverfahren bislang nur beschränkt herstellbar.

Der Erfindung liegt nun die Aufgabe zugrunde, ein Verfahren zu schaffen, womit komplexe verstärkte Kunststoffgegenstände insbesondere im Pultrusionsverfahren herstellbar sind.

Ein Verfahren zur Lösung dieser Aufgabe weist die Maßnahmen des Anspruchs 1 auf. Dadurch, dass nach diesem Verfahren vorgesehen ist, bei der Bildung des Kunststoffgegenstands die Form und einen Teil des bereits fertiggestellten Kunststoffgegenstands in den Formgebungsprozess einzubeziehen, lassen sich Kunststoffgegenstände bilden, deren Gesamtgestalt vom pultrudierten Kunststoffstrangprofil abweicht. Das können Kunststoffprofile sein, deren Gestalt komplexer ist als diejenige des jeweils pultrudierten Kunststoffstrangs. Bei diesem erfindungsgemäßen Verfahren wird ein rohrartiger Kunststoffgegenstand aus mehreren schraubenlinien- bzw. spiralartig aneinandergereihten Windungen gebildet wird. Die Windungen werden als fortlaufender verstärkter Kunststoffstrang pultrudiert, wobei der Querschnitt der Windungen sowohl von der Form als von einem Teil des bereits hergestellten Kunststoffgegenstands vorgegeben wird. Vorzugsweise wird eine bereits geformte (vorangehende) Windung genutzt, um zusammen mit der Form die Folgewindung auszubilden, insbesondere zu pultrudieren. Dadurch braucht die Form die strangförmig pultrudierte Windung nicht vollständig zu umgeben, was es ermöglicht, den Kunststoffgegenstand aus zusammenhängenden und vorzugsweise miteinander verbundenen Windungen zu bilden. Die Verbindung der Windungen untereinander erfolgt an solcher Stelle bzw. Wandung des herzustellenden Teils der Folgewindung, der nicht von der Form, sondern der vorangehenden Windung formgebend beeinflusst wird. Dadurch können sich die Windungen beim Pultrudieren fest und dauerhaft verbinden, nämlich verschmelzen.

Durch die Bildung des Kunststoffgegenstands aus zusammenhängenden, spiralförmigen Windungen wird bei der Pultrusion mittels der Form ein verstärkter Kunststoffstrang gebildet, der durch eine entsprechende Krümmung der Form in Herstellrichtung des Kunststoffstrangs spiralförmig verläuft. Vorzugsweise ist dabei vorgesehen, dass die Achse, um die die Windung des Kunststoffgegenstands spiralförmig herumläuft, mit einer Längsmittelachse des insgesamt herzustellenden Kunststoffgegenstands, insbesondere eines rohrförmigen Kunststoffgegenstands, zusammenfällt. So entsteht ein starres Kunststoffrohr oder ein in gewissen Grenzen flexibles Kunststoffrohr oder ein Kunststoffschlauch.

Bevorzugt ist es vorgesehen, dass die Form einseitig offen ist und relativ auf einen Teil der vorangehenden Windung und der Folgewindung des Kunststoffgegenstands bewegt wird. Die vorangehende, bereits vorher hergestellte Windung dient so nicht nur zur Bildung einer einseitigen Begrenzung der Folgewindung an der von der Form freigelassenen Seite, sondern auch zur Führung insbesondere der herzustellenden nachfolgenden Windung. Dadurch wird erreicht, dass die nachfolgende Windung hinsichtlich ihrer Krümmung der vorangehenden Windung entspricht.

Weiter ist es bevorzugt vorgesehen, dass die periodische Relativbewegung der Form zum Kunststoffgegenstand derart erfolgt, dass die Form entlang des Verlaufs der herzustellenden Windung des Kunststoffgegenstands auf demselben periodisch bewegt wird, und zwar insbesondere relativ zum dabei stillstehenden Kunststoffgegenstand bzw. stillstehender Windung. Während dieser periodischen Bewegung der Form wird das Kunststoffteil, insbesondere ein Teil der vorangehenden, fertigen Windung, festgehalten. Dies kann auf verschiedene Weise geschehen, beispielsweise durch Greifer, Klammern oder dergleichen. Bevorzugt ist vorgesehen, die Form diskontinuierlich bzw. schrittweise hin-und herzubewegen, wobei während der Rückwärtsbewegung der Form gegen die Pultrusionsrichtung eine Relativbewegung der Form auf einen Teil einer Windung des Kunststoffgegenstands stattfindet. Auf diese Weise wird nach einer Art Pilgerschrittverfahren nach und nach ein Stück einer Windung aus der Form in Pultrusionsrichtung herausgeschoben, und zwar vorzugsweise nachdem der betreffende Teil der Windung in der Form sich mindestens so weit verfestigt hat oder ausgehärtet ist, dass er in sich ausreichend stabil ist.

Weiter ist es vorgesehen, dass beim entgegen der Pultrusionsrichtung erfolgenden periodischen Zurückbewegen der Form auf der Windung des Kunststoffgegenstands der Kunststoffgegenstand von beispielsweise einem Greifer festgehalten wird, vorzugsweise im Bereich einer bereits hergestellten, vorangehenden Windung. Dadurch kann beim Festhalten der vorangehenden Windung ein Teil der danach folgenden Windung aus der Form herausgezogen werden. Danach wird der Greifer wieder geöffnet, also von der Windung gelöst. Nun wird der Greifer gegen die Pultrusionsrichtung wieder vor die Form gefahren und dann die Form mit dem Greifer samt der Windung in Pultrusionsrichtung ein Stück vorbewegt, wobei es um ein Drehen des bereits hergestellten Teils des Kunststoffgegenstands um seine Längsmittelachse kommt.

Weitere vorteilhafte Ausgestaltungen des Verfahrens zur Herstellung des spiralförmigen bzw. aus Windungen bestehenden Kunststoffgegenstands ergeben sich aus den Unteransprüchen.

Darüber hinaus ist es auch denkbar, dass die Form, der mindestens eine Greifer und der Materialvorrat zur Herstellung des Kunststoffgegenstands um den Kern herumbewegbar sind. Der Kern braucht dadurch zur Herstellung des Kunststoffgegenstands nicht bewegt, insbesondere nicht gedreht zu werden. Das ermöglicht es vor allem, den Kunststoffgegenstand um große Kerne herum herzustellen. Der Kern kann nach der Herstellung des Kunststoffgegenstands entfernt werden. Bevorzugt ist aber vorgesehen, den Kunststoffgegenstand auf dem Kern zu belassen, also einen Gegenstand mit einem darum angeordneten Kunststoffgegenstand zu schaffen, wobei der Kunststoffgegenstand fest und dauerhaft mit dem Kern verbunden bleibt. Bevorzugt ist es vorgesehen, den mindestens einen Greifer und den Materialvorrat stets gemeinsam und gleichzeitig um den Kern herum zu bewegen. Die Form wird hingegen separat und unabhängig vom mindestens einen Greifer und dem Materialvorrat bewegt. Dadurch, dass der mindestens eine Greifer und der Materialvorrat gleichzeitig bewegt werden, werden die zur Verstärkung des Kunststoffgegenstands dienenden Stränge, Gewebe oder dergleichen beim Hindurchziehen durch die Form nicht so sehr gestreckt, dass sie sich an bestimmten Stellen der Form konzentrieren; vielmehr behalten so die Stränge sondern die vorgesehene Relativposition innerhalb der Form bei.

Weiterhin ist es vorstellbar, um den vorzugsweise stillstehenden Kern herum einen spiralförmigen Kunststoffgegenstand mit vorzugsweise voneinander beabstandeten Windungen herzustellen. Der Kunststoffgegenstand bildet so eine den Kern außen umgebende Spirale aus verstärktem Kunststoff. Diese Spirale kann zur Verstärkung und/ oder zum Schutz des Kerns dienen, wobei sie bei voneinander beabstandeten Windungen flexibel ist. Beim Kern kann es sich um ein Rohr aus verschiedenen Materialien, beispielsweise Metall oder Kunststoff, aber auch einen Schlauch, eine Leitung, ein Kabel oder dergleichen handeln, die vom äußeren spiralförmigen Kunststoffgegenstand verstärkt wird.

Außerdem ist es denkbar, dass die Windungen des vorzugsweise spiralförmigen Kunststoffgegenstands sowohl von der Form als auch von der Mantelfläche des zylindrischen Kerns ihre Form bzw. Gestalt erhalten. Die Form umschließt daher das Profil der jeweiligen Windung nur teilweise, nämlich von drei oder auch nur zwei Seiten. Eine Seite der Windung, die am Kern anliegt, wird von der zylindrischen Mantelfläche derselben gebildet bzw. geformt. Dabei kann der Kern die Windungen des Kunststoffgegenstands tragen und mit der zylindrischen Mantelfläche verbunden sein durch Anschmelzen oder Ankleben.

Die Form, der Greifer und der Materialvorrat können sich auf einer Spiralbahn um die Mantelfläche des zylindrischen Kerns herum bewegen. Durch einen Vorschub der Form, des mindestens einen Greifers und des Materialvorrats in Längsrichtung des Kerns kommt die spiralförmige Windung des Kunststoffgegenstands um den Kern zustande. Durch entsprechenden Vorschub der Form, des mindestens einen Greifers und des Materialvorrats in Längsrichtung des Kerns können die einzelnen Windungen des Kunststoffgegenstands einen beliebigen Abstand voneinander aufweisen, ohne dass sie sich gegenseitige berühren.

Weiter können der Greifer und der Materialvorrat gemeinsam schrittweise, also diskontinuierlich, relativ zu der Form und dem zylindrischen Kern auf der Spiralbahn um den Kern bewegt werden. In mindestens einer Herstellungsphase des Kunststoffgegenstands steht dabei die Form relativ zum Greifer und dem Materialvorrat still. Die Form bewegt sich dann auch nicht relativ zum zylindrischen Kern. Auf diese Weise bleibt der relative Abstand zum Greifer und dem Materialvorrat durch gemeinsames Verfahren und gemeinsame Stillstandsphasen konstant. Die Form ist demgegenüber relativ zum Kern und relativ zu den Windungen des herzustellenden Kunststoffgegenstands periodisch bewegbar. In einer Herstellungsphase des Kunststoffgegenstands kann diese Relativbewegung der Form zu den Windungen des Kunststoffgegenstands in Stillstandsphasen des Greifers und des Materialsvorrats erfolgen. Vor allem wird zum Ausformen eines Teils einer Windung die Form relativ zur Windung und zum Kern gegen die Pultrusionssrichtung zurückbewegt bei stillstehendem Greifer und Materialvorrat.

Bei einer anderen bevorzugten Ausgestaltung ist es vorgesehen, dass der mindestens eine Greifer der Form in Pultrusionsrichtung des Kunststoffgegenstands bzw. längs der Windungen gesehen unmittelbar vorgeordnet wird. Dabei ist der Abstand zwischen dem Greifer und der Form durch abwechselndes Bewegen der Form oder des Greifers mit dem Materialvorrat veränderbar, insbesondere zum Ausstoßen eines neu hergestellten ausgehärteten Abschnitts der Windung aus der Form.

Es ist auch denkbar, zwischen den einzelnen aufeinanderfolgenden Windungen des Kunststoffgegenstands ein Abstandshaltermaterial, insbesondere Abstandshalter oder Abstandshalterstreifen, vorzusehen. Insbesondere ein durchgehender Abstandshalterstreifen kann kontinuierlich während der Herstellung des Kunststoffgegenstands mit fortschreitender Bildung der Windungen zwischen zwei aufeinanderfolgenden Windungen eingebracht werden. Dadurch berühren sich die Windungen nicht, obwohl sie dicht aufeinanderfolgen. Die Windungen sind lediglich vom vorzugsweise dünnen Abstandshalterstreifen voneinander getrennt. Der Abstandshalterstreifen bewirkt, dass eine vorhergehende Windung bei der Formgebung der daran anliegenden Seite bzw. Wandung der als nächstes herzustellenden Windung durch Anformen an die freiliegende Seite des Abstandshalterstreifens ausgeformt werden kann. Infolge der Abstandshalterstreifen kann sich der den Kern umhüllende schlauchförmige oder rohrförmige Kunststoffgegenstand trotz der sich beidseitig des Abstandshalterstreifens berührenden benachbarten aufeinanderfolgenden Windungen flexibel verformen. Das gilt insbesondere dann, wenn der Abstandshalterstreifen nur aus einem beispielsweise silikonisierten Material oder mit silikonisierten Flächen versehen ist, die ein Anhaften der Wandungen aufeinanderfolgender Windungen an den Abstandshalterstreifen verhindern.

Bevorzugte erfindungsgemäße Verfahren werden nachfolgend anhand der Zeichnung näher erläutert. In dieser zeigen:
- Fig. 1: eine schematische Darstellung eines Teils einer Vorrichtung zur Herstellung eines Kunststoffgegenstands,
- Fig. 2: einen Längsschnitt durch einen Teil des Kunststoffgegenstands mit einer Form,
- Fig. 3: eine perspektivische Darstellung einer Vorrichtung zur Herstellung eines Kunststoffgegenstands nach einem Verfahren gemäß einem zweiten Ausführungsbeispiel der Erfindung,
- Fig. 4: einen perspektivischen Längsschnitt durch die Vorrichtung der Fig. 3,
- Fig. 5: einen mittigen Längsschnitt durch die Vorrichtung der Fig. 3 und 4,
- Fig. 6: eine schematische Darstellung eines ersten Verfahrensschritts,
- Fig. 7: eine schematische Darstellung eines folgenden Verfahrensschritts,
- Fig. 8: eine schematische Darstellung eines weiteren folgenden Verfahrensschritts,
- Fig. 9: eine perspektivische Darstellung einer Vorrichtung zur Herstellung eines Kunststoffeggenstands gemäß einem weiteren Ausführungsbeispiel der Erfindung,
- Fig. 10: einen perspektivischen Längsschnitt durch die Vorrichtung der Fig. 9, und
- Fig. 11: einen mittigen Längsschnitt durch die Vorrichtung der Fig. 9 und 10 mit einem teilweise hergestellten Kunststoffgegenstand.

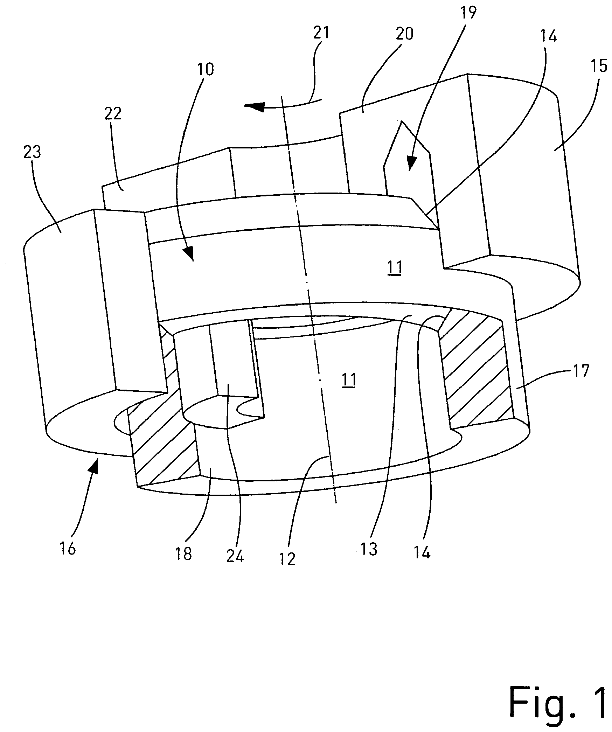

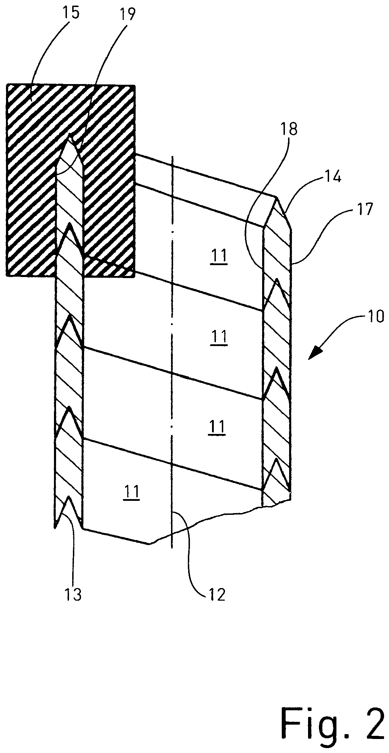

Die Fig. 1 und 2 verdeutlichen die Herstellung eines mit Fasern, Strängen oder dergleichen verstärkten Kunststoffgegenstands. Bei diesem Kunststoffgegenstand handelt es sich um ein Kunststoffrohr 10 aus zusammenhängenden, miteinander verbundenen Abschnitten der wendel- bzw. spiralartig durchgehenden Windung 11. Die Windung 11 wird als fortlaufender Strang pultrudiert. Die Windung 11 schlängelt sich schraubenlinienartig um eine Längsmittelachse 12 des Kunststoffrohrs 10 herum. Benachbarte, ringförmige Abschnitte der Windung 11 sind an ihren aneinanderliegenden Stirnflächen 13, 14 miteinander verbunden, indem sich der momentan pultrudierte Abschnitt der Windung 11 im noch nicht ausgehärteten Zustand mit seiner Stirnfläche 13 mit der Stirnfläche 14 des vorhergehend hergestellten Abschnitts der Windung 11 vereinigt und dabei die Stirnflächen 13 und 14 durch Verkleben bzw. Verschmelzen dauerhaft fest zum Kunststoffrohr 10 miteinander verbunden werden.

Die Stirnflächen 13 und 14, womit die einzelnen Ringabschnitte der Windung 11 miteinander verbunden sind, verfügen im gezeigten Ausführungsbeispiel über eine abgewinkelte, dachförmige Gestalt. Die Stirnflächen 13 und 14 können aber beliebige andere Gestalten aufweisen. Vorzugsweise sind sie profiliert, sie können aber auch eben sein.

Eine zur fortlaufenden Pultrusion des Kunststoffrohrs 10 dienende Vorrichtung ist teilweise und schematisch in den Fig. 1 und 2 dargestellt. Die Vorrichtung verfügt im Wesentlichen über eine Form 15, einen Greifer 16 und einen in der Figur nicht dargestellten Materialvorrat für die zur Verstärkung des Kunststoffrohrs 10 dienenden Gewebe, Stränge oder auch Fasern. Der Materialvorrat weist üblicherweise für jeden der meist mehreren Stränge eine Vorratsrolle auf. Von den Vorratsrollen werden die Stränge bei der Pultrusion der Windung 11 zur Herstellung des Kunststoffrohrs 10 abgezogen.

Die Form 15 umgibt die herzustellende Windung 11 nur teilweise, und zwar im gezeigten Ausführungsbeispiel nur von drei Seiten, nämlich der Stirnfläche 14, der zylindrischen Außenmantelfläche 17 und der zylindrischen Innenmantelfläche 18. Dadurch befindet sich in der Form 15 ein nutartiger, einseitig offener Formhohlraum 19. Geschlossen wird der nutartige Formhohlraum 19 der Form 15 durch die Stirnfläche 14 des bereits hergestellten, vorangehenden Abschnitts der Windung 11. Dadurch trägt die Windung 11 zum Teil selbst zur Bildung und Ausformung der Stirnfläche 13 des momentan pultrudierten Abschnitts der Windung 11 bei. Der Formhohlraum 19 in der Form 15 weist einen Verlauf auf, der einerseits dem Durchmesser des Kunststoffrohrs 10 entspricht und andererseits der Steigung der Windung 11 zur Bildung des Kunststoffrohrs 10. Diese Steigung entspricht bei einem Umlauf der Windung 11 dem Abstand der Spitzen der Stirnflächen 13 und 14 bezogen auf den Querschnitt der Windung 11.

Der nutartige Formhohlraum 19 weist eine Tiefe in Richtung der Längsmittelachse 12 des herzustellenden Kunststoffrohrs 10 auf, die größer ist als die Länge des Profils der Windung 11, nämlich des Abstands der Stirnflächen 13, 14. Dadurch erstreckt sich die Form 15 auch über einen Teil des zuvor hergestellten Rings der Windung 11, wodurch benachbarte Ringe der Windung 11 von der Form 15 beim Verschmelzen ihrer aneinander anliegenden Stirnflächen 13 und 14 geführt bzw. zentriert werden.

Die Form 15 erstreckt sich über einen Teil des Umfangs des Kunststoffrohrs 10. Im gezeigten Ausführungsbeispiel erstreckt sich die Form 15 etwa über den halben Umfang des Kunststoffrohrs 10. Dieser Bereich kann aber je nach Durchmesser des Kunststoffrohrs 10, dem verwendeten Kunststoff und den Pultrusionsparametern größer oder kleiner sein. An einer offenen Eintrittsfläche 20 laufen in die Form 15 die vom Materialvorrat kommenden, nicht gezeigten Stränge zur Verstärkung des Kunststoffrohrs 10 ein. Die Form 15 wird so durch die Eintrittsfläche 20 mit den zur Verstärkung dienenden Strängen oder auch sonstigen Verstärkungsmaterialien wie Fasern oder dergleichen versorgt.

Einer in Pultrusionseinrichtung 21 der Eintrittsfläche 20 gegenüberliegenden Austrittsfläche 22 der Form 15 ist ein Greifer 16 vorgeordnet. An der Austrittsfläche 22 verlässt nach und nach ein Abschnitt der pultrudierten Windung 11 die Form 15. Dabei wird die Richtung, mit der die Windung 11 aus der Austrittsfläche 22 der Form 15 austritt, als Pultrusionsrichtung 21 bezeichnet. Gegensinnig zur Pultrusionsrichtung 21 ist die Herstellungsrichtung der Windung 11, nämlich quasi die "Wachstumsrichtung" derselben, gerichtet. Für die folgende Beschreibung wird die Pultrusionsrichtung 21 verwendet. Als "vorn" wird die Seite der Form 32 bezeichnet, die in Pultrusionsrichtung 21 gesehen vor der Austrittsfläche 22 liegt. Als "hinten" wird mithin das bezeichnet, was in Pultrusionsrichtung 21 gesehen hinter der Eintrittsfläche 20 der Form 15 liegt, in die die zur Verstärkung des Kunststoffrohrs 10 dienenden Stränge in Pultrusionsrichtung 21 in die Form 15 einlaufen. Diese Betrachtungs- bzw. Bezeichnungsweise gilt auch für nachfolgende Ausführungsbeispiele.

Der Greifer 16 weist zwei gegenüberliegende Greiferteile 23, 24 auf, die der Außenmantelfläche 17 und der Innenmantelfläche 18 der Windung 11 zugeordnet sind. Der Greifer 16 ist kürzer als die Form 15 ausgebildet, so dass er sich nur über einen geringen Teil des Umfangs eines Rings oder eines Gangs der Windung 11 erstreckt. Die Greiferteile 23, 24 sind zusammenfahrbar zum Festhalten der Windung 11 an der Außenmantelfläche 17 und der Innenmantelfläche 18. Zum Lösen von der Windung 11 sind die Greiferteile 23, 24 auseinanderfahrbar. Der Greifer 16 ist in Längsrichtung des Kunststoffrohrs 10 so bemessen, dass er die Außenmantelfläche 17 und die Innenmantelfläche 18 mehrerer Umläufe der Windung 11 erfassen kann, wenn er die Windung 11 hält bzw. festklemmt. Die mit der Außenmantelfläche 17 und der Innenmantelfläche 18 der Windung 11 in Kontakt kommenden Flächen der Greiferteile 23 und 24 sind korrespondierend zum Radius der Außenmantelfläche 17 bzw. Innenmantelfläche 18 ausgebildet.

Das Verfahren zur Herstellung des Kunststoffrohrs 10 (Fig. 1 und 2) läuft wie folgt ab:
Das Kunststoffrohr 10 wird bei der Herstellung phasenweise um die Längsmittelachse 12 gedreht. Dabei wird die strangartige Windung 11 des herzustellenden Kunststoffrohrs 10 nach und nach, und zwar vorzugsweise schrittweise, hergestellt. Hierbei wird abschnittsweise das Kunststoffrohr 10 in Pultrusionsrichtung 21 aus der Form 15 herausgedreht, und zwar vergleichbar mit dem Herausdrehen einer Schraube aus einer Mutter. Die Form 15 und der Greifer 16 werden nur periodisch in Pultrusionsrichtung 21 und gegen die Pultrusionsrichtung 21 um die Längsmittelachse 12 des Kunststoffrohrs 10 hin- und herbewegt, wobei es in bestimmten Pultrusionsphasen auch zu einer periodischen Bewegung der Form 15 relativ zur Windung 11 kommt, und zwar gegen die Pultrusionsrichtung 21. In einer anderen Pultrusionsphase werden die Form 15 und der Greifer 16 zusammen mit der Windung 11 in Pultrusionsrichtung 21 insbesondere um einen Schritt vorbewegt. Dabei wird die Windung 11 schrittweise in Pultrusionsrichtung 21 hergestellt, und zwar nach Art eines Pilgerschrittverfahrens.

Wenn in der Form 15 der sich darin befindende Teil der Windung 11 ganz oder zumindest teilweise ausgehärtet ist, wird dieser Teil der Windung 11 sozusagen "entformt" durch ein Zurückbewegen der Form 15 gegen die Pultrusionsrichtung 21. Hierbei wird vom geschlossenen Greifer 16 mindestens ein zuvor hergestellter und aus der Form 15 bereits herausbewegter Teil der Windung 11 festgehalten. Dadurch kommt es beim Zurückbewegen der Form 15 gegen die Pultrusionsrichtung 21 zu einer Relativbewegung der Form 15 zur Windung 11, wodurch ein ausgehärteter Teil der Windung 11 die Form 15 an der Eintrittsfläche 20 verlässt. Bei diesem Zurückbewegen der Form 15 entgegen der Pultrusionsrichtung 21 werden vom Materialvorrat Stränge in den noch leeren Formhohlraum 19 der Form 15 eingezogen, die dann anschließend in der Form 15 mit verfestigtem Kunststoff ummantelt werden. Außerdem wandert die Form 15 in Wachstumsrichtung der Windung 11 weiter.

Nach dem Zurückbewegen der Form 15 gegen die Pultrusionsrichtung 21 wird der Greifer 16 geöffnet und anschließend gegen die Pultrusionsrichtung 21 zurückgefahren bis kurz vor die Austrittsfläche 22 der Form 15. Anschließend wird durch Schließen des Greifers 16 die Windung 11 wieder vom Greifer 16 erfasst und danach die Form 15 und der Greifer 16 zusammen in Pultrusionsrichtung 21 vorgefahren, nämlich um die Längsmittelachse 12 des Kunststoffrohrs 10 gedreht. Diese Drehung erfolgt über einen Teilbereich des Umfangs des Kunststoffrohrs 10, der kleiner ist als der Teilbereich, den die Form 15 des Kunststoffrohrs 10 umgibt.

Nachdem der sich in der Form 15 befindliche Abschnitt der Windung 11 mindestens größtenteils ausgehärtet ist, beginnt der zuvor beschriebene Vorgang von neuem, indem bei vom Greifer 16 festgehaltener Windung 11 die Form 15 wieder gegen die Pultrusionsrichtung 21 zurückbewegt wird und bei der dabei entstehenden Relativbewegung der Form 15 zum in dieser Phase nicht um die Längsmittelachse 12 verdrehten Windung 11 des Kunststoffrohrs 10 ein erneut pultrudierter Abschnitt der Windung 11 entformt wird und sich die Form 15 wieder in Herstellungsrichtung, nämlich Wachstumsrichtung der Windung 11, weiterbewegt.

Detaillierter ist das zuvor beschriebene Pultrusionsverfahren in der WO 2008/116560 A1 beschrieben, worauf voll inhaltlich Bezug genommen wird.

Bei der zuvor beschriebenen Herstellungsweise des Kunststoffrohrs 10 wird der Querschnitt der Windung 11 zum Teil, nämlich die Außenmantelfläche 17, die Innenmantelfläche 18 und die Stirnfläche 14, im nutartigen Formhohlraum 19 der Form 15 gebildet, während die Stirnfläche 13 vom zuvor pultrudierten Abschnitt der Windung 11 gebildet wird, die dazu teilweise in die offene Seite des nutartigen Formhohlraums 19 eintritt und diesen abschließt. An der Formgebung der Windung 11 sind somit die Form 15 und ein anderer, bereits vorher pultrudierter Teil der Windung 11 des Kunststoffrohrs 10 beteiligt.

Zu Beginn der Herstellung des Kunststoffrohrs 10, wenn noch kein ringförmiger Abschnitt der Windung 11 existiert, der die offene Seite des nutartigen Formhohlraums 19 der Form 15 verschließen kann, wird die offene Seite des Formhohlraums 19 durch ein Hilfsprofil verschlossen, dessen in den Formhohlraum 19 hineinragende Stirnfläche der Gestalt der Stirnfläche 14 entspricht. Dieses Hilfsprofil wird entfernt, sobald ein umlaufender Abschnitt der Windung 11 pultrudiert worden ist, der dann - wie auch die die nachfolgenden umlaufenden Abschnitte der Windung 11 - zusammen mit der Form 15 zur Formgebung bzw. Querschnittsbildung der Windung 11 beiträgt.

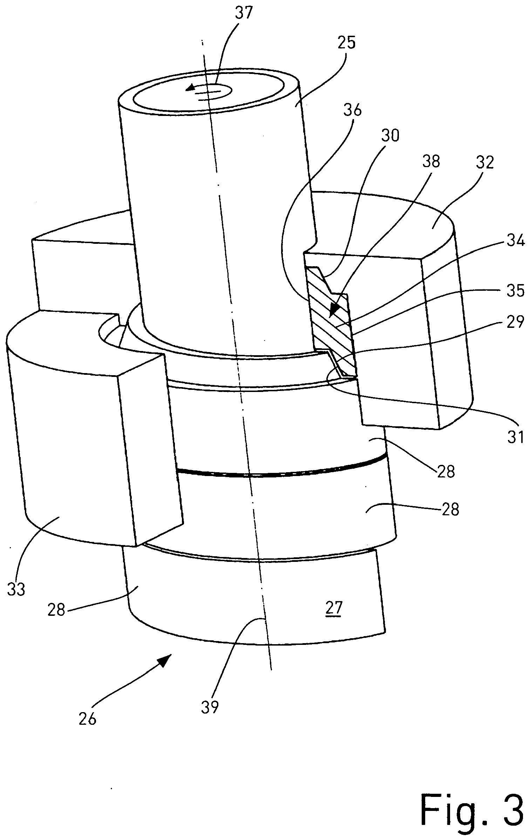

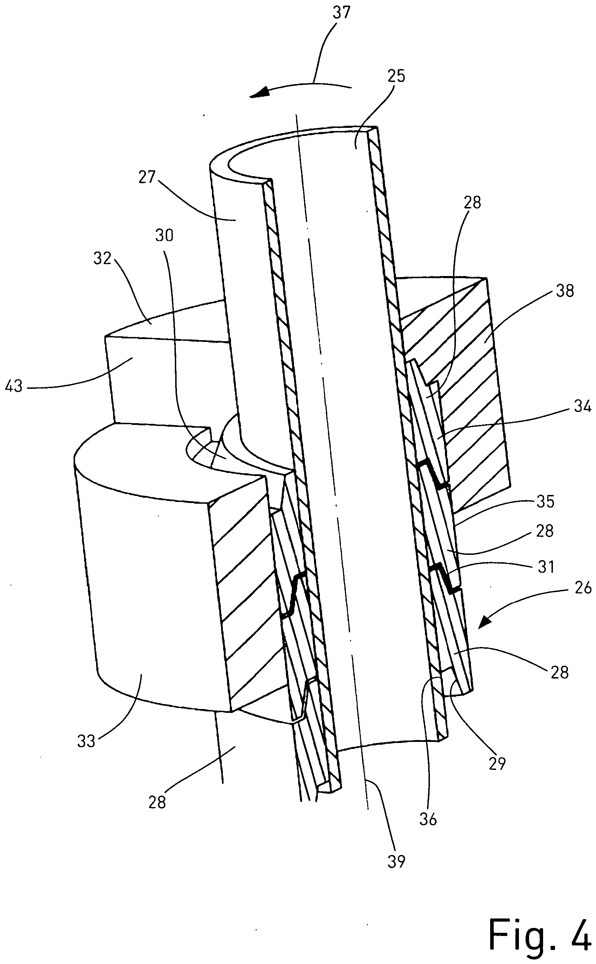

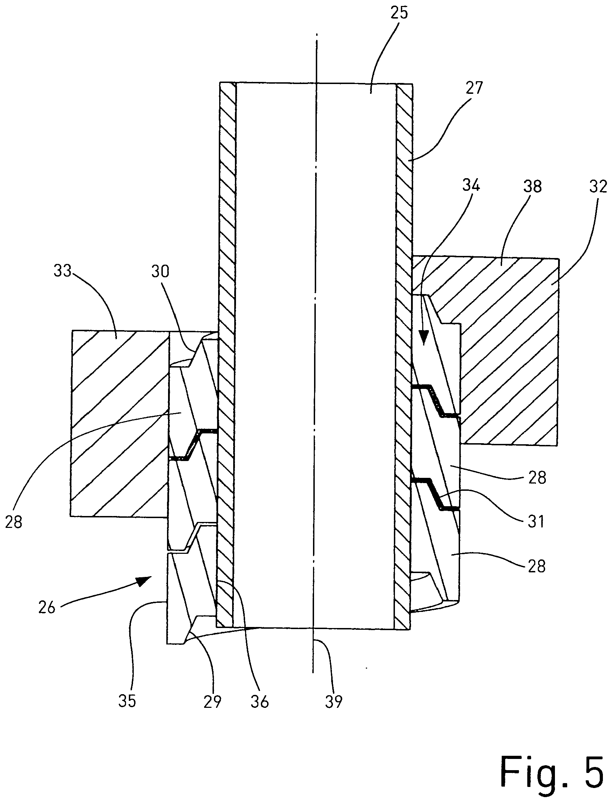

Die Fig. 3 bis 8 zeigen die Herstellung eines von einem verstärkten Kunststoffgegenstand umgebenden Kern in Gestalt eines Rohrs 25. Das Rohr 25 kann aus beliebigem Material bestehen. Es ist auch denkbar, an der Stelle des Rohrs 25 einen anderen zylindrischen Gegenstand außen mit dem Kunststoffgegenstand zu versehen. Beim Kunststoffgegenstand handelt es sich um eine mit mehreren durchgehenden Strängen 40 verstärkte Kunststoffspirale 26. Die Kunststoffspirale 26 ist vorzugsweise mit der äußeren, zylindrischen Mantelfläche 27 des Rohrs 25 kraftschlüssig durch Verkleben oder Schrumpfen bzw. reibschlüssig verbunden. Die Kunststoffspirale 26 umgibt das Rohr 25 als endlose Windung 28, wobei zueinander gerichtete Stirnflächen 29 und 30 aufeinanderfolgender Gänge der Windung 28 voneinander beabstandet sind. Im gezeigten Ausführungsbeispiel sind die Stirnflächen 29, 30 aufeinanderfolgender Gänge der Windung 28 durch einen dazwischen angeordneten Abstandshalterstreifen 31 voneinander beabstandet. Der vorzugsweise auch endlose spiralförmig gewickelte Abstandshalterstreifen 31 füllt dabei den Zwischenraum zwischen den Stirnflächen 29, 30 aufeinanderfolgender Gänge der Windungen 28 aus, indem gegenüberliegende Seiten des Abstandshalterstreifens 31 an der Stirnfläche 29 des einen Gangs der Windung 28 und der Stirnfläche 30 des nachfolgenden Gangs der Windung 28 anliegt.

Der Querschnitt der Windung 28 ist im gezeigten Ausführungsbeispiel so gewählt, dass die Stirnflächen 29, 30 profiliert sind, und zwar im gezeigten Ausführungsbeispiel einen Z-ähnlichen Verlauf mit zwei Abknickungen aufweisen. Beide Stirnflächen 29, 30 laufen dabei parallel zueinander. Die Erfindung eignet sich aber auch für Windungen 28 mit beliebigen anderen Querschnitten, insbesondere beliebig anders profilierten Stirnflächen 29, 30. Die Stirnflächen 29, 30 können gegebenenfalls auch gerade sein.

Um die Kunststoffspirale 26 fortlaufend um das Rohr 25 oder einen sonstigen als Kern dienenden zylindrischen Gegenstand herum herzustellen, dienen auch hier eine Form 32 und ein Greifer 33. Die Form 32 umgibt das Rohr 25 über einen Teil des Umfangs, und zwar im gezeigten Ausführungsbeispiel um etwa den halben Umfang. Je nach Herstellungsbedingungen und Abmessungen des Rohrs 25 kann die Form 32 aber auch einen kleineren oder größeren Teil des Umfangs des Rohrs 25 umgeben. Die Form 32 weist eine Kavität 34 auf, womit zwei Profilseiten der Windung 28 bildbar sind, und zwar die Stirnflächen 30 und eine Außenmantelfläche 35. Eine gegenüberliegende Innenmantelfläche 36 des Profils der Windung 28 wird von der Mantelfläche 27 des Rohrs 25 gebildet. Die gegenüberliegende Stirnfläche 29 des Querschnitts der Windung 28 wird gebildet von der Stirnfläche 30 des vorhergehend hergestellten Gangs der Windung 28 bzw. einer Fläche des Abstandshalterstreifens 31 zwischen den Stirnflächen 29 und 30 zweier aufeinanderfolgender Gänge der Windung 28. Somit trägt zur Bildung der Querschnittsformen der Windung 28 nicht nur die Form 32 bei, sondern auch das Rohr 25 und ein zuvor hergestellter Teil der Windung 28. Dadurch, dass die Stirnfläche 29 eines Teils der Windung 28 bei der Pultrusion von der Stirnfläche 30 des vorangehenden Abschnitts der Windung 28 bzw. den daran anliegenden Abstandshalterstreifen 31 gebildet wird, ist die Form 32 in Richtung zur Kunststoffspirale 26 offen. Auf der gegenüberliegenden Seite zur Bildung der Stirnfläche 30 der Windung 28 ist die Form 32 gegenüber der Mantelfläche 27 des Rohrs abgedichtet.

Der in Pultrusionsrichtung 37 vor der Form 32 angeordnete Greifer 33 ist zur Anlage an eine Stelle der Außenmantelfläche 35 der bereits hergestellten Kunststoffspirale 26 ausgebildet. Der Greifer 33 ist durch einen nicht gezeigten Antrieb von außen gegen die Windung 28 drückbar. Dabei wird der von der Greiffläche des Greifers 33 überdeckte Teil der Windung 28 gegen die Mantelfläche 27 des Rohrs 25 gedrückt. Durch ein Wegbewegen von der Außenmantelfläche 35 der Windung 28 gibt der Greifer 33 die Windung 28 der Kunststoffspirale 26 wieder frei.

Die Herstellung der Kunststoffspirale 26 auf dem Rohr 25 (Fig. 3 bis 8) kann grundsätzlich so erfolgen wie im zuvor beschriebenen Ausführungsbeispiel der Fig. 1 und 2 erläutert. Nur ist hier an der Formgebung der Windung 28 noch das Rohr 25 beteiligt. Außerdem wird an der Eintrittsfläche 38 für die Stränge oder Fasern in die Form kontinuierlich der Abstandshalterstreifen 31 zwischen benachbarten Gängen der Windung 28 zugeführt. Wenn dieser Abstandshalterstreifen 31 aus einem Material besteht, an dem der Kunststoff der Windung 28 nicht anhaftet oder die Außenflächen des Abstandshalterstreifens 31 nicht haftend ausgebildet bzw. beschichtet sind, ist die Kunststoffspirale 26 flexibel, obwohl sie zusammen mit dem Abstandshalterstreifen 31 zwischen den Stirnflächen 29 und 30 der Windung 28 einen quasi geschlossenen Ring um das Rohr 25 herum bildet.

Gemäß einer alternativen Ausgestaltung der Erfindung ist es denkbar, den in den Fig. 3 bis 5 dargestellten Greifer 33 mit einem in den Figuren nicht dargestellten Materialvorrat 41, insbesondere mehrere Vorratsrollen für die einzelnen zur Verstärkung der Kunststoffspirale 26 dienenden Stränge 40, zu koppeln. Diese Kopplung erfolgt derart, dass der Greifer 33 und der (nicht gezeigte) Materialvorrat gemeinsam periodisch um das Rohr 25 herum bewegt werden, und zwar schrittweise. Die einzelnen gekoppelten Bewegungsschritte des Greifers 33 und des Materialvorrats erstrecken sich jeweils nur über einen Teilumfang des Rohrs 25. Auch die Form 32 wird periodisch um das Rohr 25 herumbewegt, und zwar vorzugsweise stets in gleichem Maße wie der Greifer 33 mit dem Materialvorrat 41. Allerdings werden die Form 32 einerseits und der Greifer 33 mit dem Materialvorrat 41 andererseits zu unterschiedlichen Zeiten um das stillstehende Rohr 25 bewegt. Durch die schrittweise Bewegung der Form 32 einerseits und des Greifers 33 mit dem Materialvorrat 41 andererseits um das Rohr 25 erfolgt die Bildung der das Rohr 25 umgebenden Kunststoffspirale 26 ohne eine Bewegung des Rohrs 25 um seine Längsmittelachse 39. Bei diesem Ausführungsbeispiel wird also im Gegensatz zu den zuvor beschriebenen Ausführungsbeispielen die Kunststoffspirale 26 nicht nach Art einer Schraube aus einer der Form 32 entsprechenden Mutter herausgedreht, sondern umgekehrt wird die Form 32 als Mutter auf die Schraube, das Rohr 25, heraufgedreht. Dabei wird die Kunststoffspirale 26 um das insgesamt stillstehende Rohr 25 herum hergestellt, ohne dass das Rohr 25 um seine Längsmittelachse 39 gedreht und der Steigung der Windung 28 entsprechend entlang der Längsmittelachse 39 in Axialrichtung bewegt werden muss.

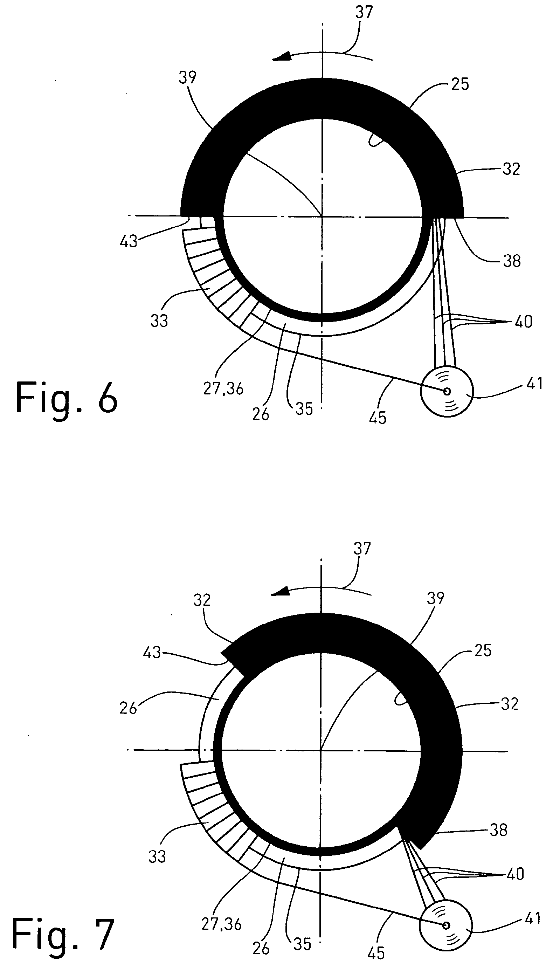

Das Verfahren zur Herstellung der um das stillstehende Rohr 25 herumpultrudierten Kunststoffspirale 26 durch die um das Rohr 25 herumbewegte Form 32 und Greifer 33 mit dem Materialvorrat 41 wird nachfolgend unter Bezugnahme auf die schematisch die einzelnen Herstellungsschritte zeigenden Fig. 6 bis 8 erläutert:
Die zur Verstärkung der Kunststoffspirale 26 dienenden Stränge 40 oder dergleichen werden vom nur andeutungsweise dargestellten Materialvorrat 41 abgezogen. Die Stränge 40 laufen dabei über die Eintrittsfläche 42 in die Form 32 ein. An der Austrittsfläche 43 verlässt die pultrudierte Kunststoffspirale 26 die Form 32. Dabei wird die Richtung, mit der die Kunststoffspirale 26 aus der Austrittsfläche 43 der Form 32 austritt, wieder als Pultrusionsrichtung 44 bezeichnet. Gegensinnig zur Pultrusionsrichtung 44 ist die Herstellungsrichtung der Kunststoffspirale 26, quasi die "Wachstumsrichtung" derselben, gerichtet.

In der Darstellung der Fig. 6 sind die Form 32 und der Greifer 33 weitestgehend zusammengefahren. Die Eintrittsfläche 42 für den Materialvorrat 41 in die Form 32 ist dabei maximal vom Materialvorrat 41 entfernt. Die Stränge 40 werden in der Form 32 mit Kunststoff ummantelt. Nachdem der Kunststoff mindestens im zum Greifer 33 weisenden Vorderteil der Form 32 ausreichend ausgehärtet ist, wird gemäß der Fig. 7 die Form 32 gegen die Pultrusionsrichtung 44 um das stillstehende Rohr 25 zurückgefahren. Dabei wird die Kunststoffspirale 26 vom Greifer 33 festgehalten, so dass sich die Form 32 gegen die Pultrusionsrichtung 44 relativ auf der Kunststoffspirale 26 bewegt, und zwar in Herstellungsrichtung der Kunststoffspirale 26, nämlich sozusagen "in Wachstumsrichtung" der Kunststoffspirale 26. Hierbei tritt ein zuletzt in der Form 32 hergestellter Teil der Kunststoffspirale 26 an der Austrittsfläche 43 der Form aus. Das heißt, dieser zuletzt hergestellte Teil der Kunststoffspirale 26 verlässt die Form 32 an der Austrittsfläche 43 in Pultrusionsrichtung 44. Beim Zurückbewegen der Form 32 laufen neue Abschnitte der Stränge 40 durch die Eintrittsfläche 42 in die Form 32 ein, wobei sich die Eintrittsfläche 42 der Form 32 dem Materialvorrat 41 nähert.

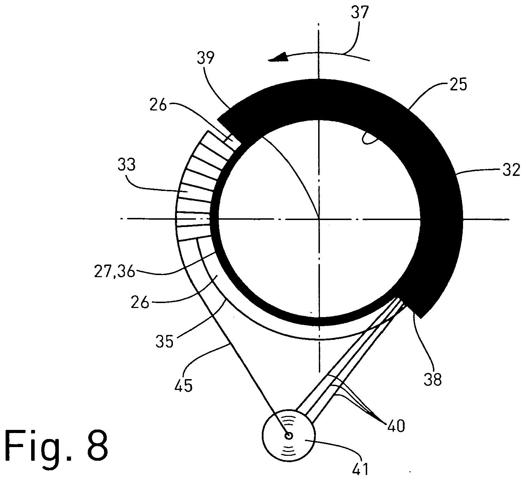

Im nächsten Schritt (Fig. 8) wird der von der Kunststoffspirale 26 gelöste Greifer 33 gegen die Pultrusionsrichtung wieder vor die Austrittsfläche 43 der Form 32 gefahren. Infolge der in den Fig. 6 bis 8 nur schematisch dargestellten Verbindung 45 des Greifers 33 mit dem Materialvorrat 41 wird beim Heranfahren des Greifers 33 an die Form 32 der Materialvorrat 41 vom Greifer 33 mitgenommen, wodurch sich der Materialvorrat 41 wieder von der Eintrittsfläche 42 der Form 32 entfernt. Die Form 32, der Greifer 33 und der Materialvorrat 41 haben nun wieder eine Position eingenommen, die derjenigen der Fig. 6 entspricht. Im Unterschied zur Fig. 6 sind in der Darstellung gemäß der Fig. 8 die Form 32, der Greifer 33 und der Materialvorrat 41 um einen Teil des Umfangs des stillstehenden Rohrs 25 herumgefahren. Die Kreisbogenbahn, die die Form 32, der Greifer 33 und der Materialvorrat 41 dabei in Herstellungs- bzw. "Wachstumsrichtung" der Kunststoffspirale 26 zurückgelegt haben, entspricht dem neu hergestellten Teil oder Bereich der Kunststoffspirale 26, der während eines Verfahrenszyklus bei der Pultrusion der Kunststoffspirale 26 durch die in den Fig. 6 bis 8 dargestellten Pultrusionsschritte hergestellt wird.

Der Abstandshalterstreifen 31 wird bei der Pultrusion der Kunststoffspirale 26 kontinuierlich zugeführt, und zwar prinzipiell so wie die Stränge 40. Vorzugsweise wird der Abstandshalterstreifen 31 über die Eintrittsfläche 38 zwischen den Stirnflächen 29 und 30 zweier aufeinanderfolgender Gänge der Windung 28 der Form 32 zugeführt.

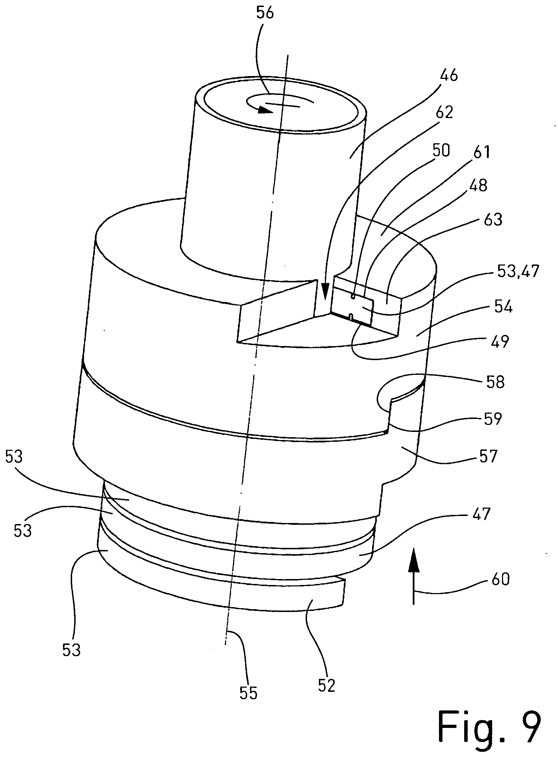

Die Fig. 9 bis 11 zeigen ein Ausführungsbeispiel der Erfindung, das prinzipiell demjenigen der Fig. 3 bis 8 entspricht. Auch bei diesem Ausführungsbeispiel wird um ein Rohr 46 herum eine Kunststoffspirale 26 hergestellt. Auch hier steht das Rohr 46 bei der Herstellung der Kunststoffspirale 47 still.

Die Kunststoffspirale 47 weist voneinander beabstandete Gänge bzw. Ringe einer Windung 53 auf. Die gegenüberliegenden Stirnflächen 48, 49 der Kunststoffspirale 47 sind profiliert. Im gezeigten Ausführungsbeispiel sind die Stirnflächen 48 und 49 gleichermaßen profiliert, nämlich jeweils mit einer mittigen Nut 50 versehen. Beliebige andere Ausgestaltungen der Stirnflächen 48 und 49 sind nach dem gezeigten Ausführungsbeispiel herstellbar.

Eine ebene Innenmantelfläche 51 der Kunststoffspirale 47 liegt an dem einen glatten zylindrischen Außenmantel aufweisenden Rohr 46 an. Die Innenmantelfläche 51 ist mit der Mantelfläche des Rohrs 46 verbunden. Dieses kann durch Aufschrumpfen, Aufsiegeln und/oder Aufkleben bei der Herstellung der Kunststoffspirale 47 um das Rohr 46 herum erfolgen. Im gezeigten Ausführungsbeispiel ist eine Innenmantelfläche 52 der Kunststoffspirale 47 glatt ausgebildet. Die Außenmantelfläche 52 kann aber auch beliebige andere Verläufe aufweisen, insbesondere wie die Stirnflächen 48 und 49 profiliert seien.

Die gezeigte Kunststoffspirale 47 ist insbesondere wegen ihrer beabstandeten Windungen 53 flexibel, so dass sie das Biegeverhalten des als Kern dienenden ummantelten Rohrs 46 oder eines anderen zylindrischen Gegenstands nicht nennenswert beeinträchtigt. Zur Pultrusion der mit in den Fig. 9 bis 11 nicht gezeigten Strängen verstärkten Kunststoffspirale 47 dient eine Form 54, die das Rohr 46 vollständig umgibt und sich entlang einer Längsmittelachse 55 so weit über das Rohr 46 erstreckt, dass die Form 54 mehrere Gänge der Windung 53 der Kunststoffspirale 47 umgreift. In Pultrusionsrichtung 56, also die Richtung, in der ein neu pultrudierter Abschnitt der Kunststoffspirale 47 schrittweise aus der Form 54 ausgeschoben oder ausgestoßen wird, folgt auf die Form 54 ein Greifer 57, der wie die Form 54 das Rohr 46 vollständig umgibt, und zwar auch mehrere Gänge der Windung 53 der Kunststoffspirale 47. Wenn der Greifer 57 dicht an die Form 54 herangefahren ist, liegt im gezeigten Ausführungsbeispiel eine Austrittsfläche 58 der Form 54 an einer Anfangsfläche 59 des Greifers 57 an (Fig. 9).

Die Form 54 weist in einer in Steigungsrichtung 60 der Kunststoffspirale 47 vornliegenden zylindrischen Fläche 61 einen Ausschnitt 62 auf. Eine etwa radial gerichtet zum Rohr 46 verlaufende Fläche des Ausschnitts 62 umgibt eine Eintrittsfläche 63 der zur Verstärkung dienenden Stränge in die Form 54 (Fig. 9). Durch die Eintrittsfläche 63 können die zur Verstärkung dienenden Stränge, Fasern oder dergleichen von einem in den Fig. 9 bis 11 nicht gezeigten Materialvorrat in die Form 54 hineinlaufen. Der mindestens eine, nicht gezeigte Materialvorrat für insbesondere mehrere Stränge ist auch bei diesem Ausführungsbeispiel so mit dem Greifer 57 verbunden, dass beide eine Einheit bilden und zusammen bewegbar sind.

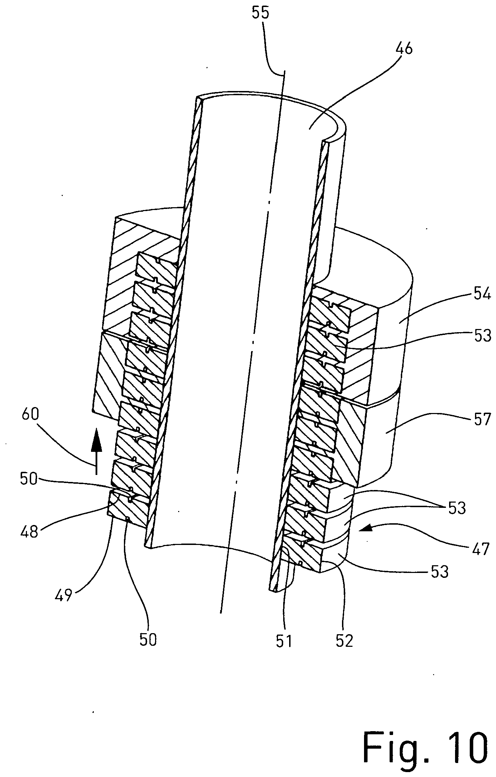

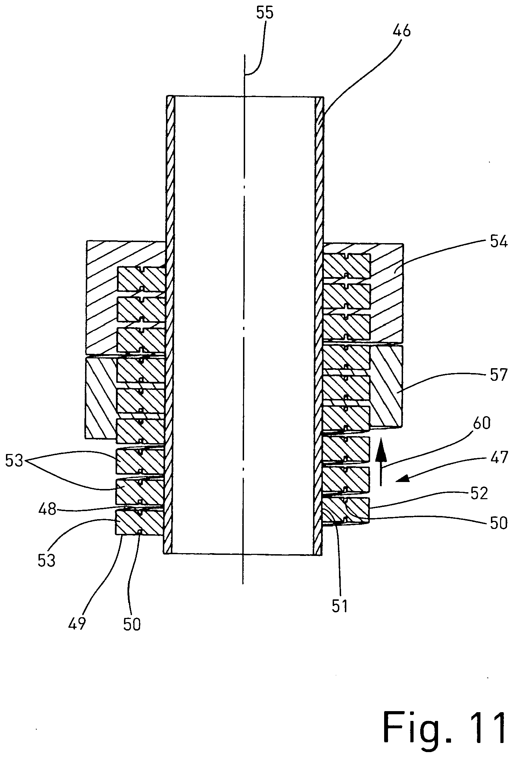

Das Verfahren zur Pultrusion der Kunststoffspirale 47 auf dem Rohr 46 läuft prinzipiell genauso ab wie beim vorherigen Ausführungsbeispiel (Fig. 6 bis 8). Demnach werden die Form 54 und der Greifer 57 mit dem Materialvorrat bei der Pultrusion der Kunststoffspirale 47 um das dabei stillstehende Rohr 46 herumbewegt, wobei mit fortschreitender Herstellung der Kunststoffspirale 47 sich die Form 54 und der Greifer 57 mit dem Materialvorrat spiralförmig gegen die Pultrusionsrichtung 56, das heißt in "Wachstumsrichtung" der Kunststoffspirale 47, um das Rohr 46 drehen und sich dabei in Längsrichtung des Rohrs 46 und Steigungsrichtung der Kunststoffspirale 47 (bezogen auf die Fig. 10 und 11 ansteigend) hochschrauben.

Auch hier wird die Form 54 schrittweise um einen gewissen Winkelbereich im Uhrzeigersinn um das Rohr 46 verdreht, wobei aus der Austrittsfläche 58 der Form 54 sozusagen nach hinten in Pultrusionsrichtung 56 ein neu pultrudierter Abschnitt der Kunststoffspirale 47 austritt. Dabei wandert die Form 54 in Fertigungsrichtung, nämlich der "Wachstumsrichtung" der Kunststoffspirale 47, auf dem Rohr 46 schraubenlinienartig weiter. Nachdem ein neues Stück pultrudierter Kunststoffspirale 47 bei vom Greifer 57 gehaltener Kunststoffspirale 47 aus der Form 54 entformt worden ist, wird analog zur Darstellung in der Fig. 7 der von der Kunststoffspirale 47 wieder gelöste Greifer 57 zusammen mit dem Materialvorrat erneut hinter die Form 54 gefahren, nämlich um die Längsmittelachse 55 des Rohrs 56 verdreht. Anschließend wird wieder die Form 54 allein in Herstellungsrichtung bzw. "Wachstumsrichtung" der Kunststoffspirale 47 bei geschlossenem Greifer 57 weiterbewegt und dann der geöffnete Greifer 57 mit dem Materialvorrat sozusagen nachgeholt.

Weil im gezeigten Ausführungsbeispiel sowohl die Form 54 als auch der Greifer 57 das Rohr 46 vollständig umgeben und sich außerdem über mehrere Windungen 53 der Kunststoffspirale 47 erstrecken, kann bei jedem Herstellungsschritt, nämlich Verdrehen einerseits der Form 54 relativ zum dabei vom Greifer 57 stillstehend gehaltenen Kunststoffspirale 47 und andererseits des Greifers 57 mit dem Materialvorrat, größer sein als beim vorher beschriebenen Ausführungsbeispiel der Fig. 6 bis 8. Denkbar wäre eine ganze Umdrehung der Form 54 und anschließend des Greifers 57 mit dem Materialvorrat um die Längsachse 55 des Rohrs 46 und gegebenenfalls sogar mehr als eine Umdrehung.

Bei einem weiteren nicht gezeigten Ausführungsbeispiel der Erfindung ist das Ausführungsbeispiel der Fig. 9 bis 11 dahingehend abgewandelt, dass die Form 54 und der Greifer 57 zwischen aufeinanderfolgenden Ringen bzw. Gängen der Windung 53 nicht bis an das Rohr 46 herangeführt sind, sondern schon mit Abstand vor der Außenmantelfläche des Rohrs 46 enden. Auf diese Weise wird das Rohr 46 von einer durchgehenden Kunststoffaußenwandung umgeben, wobei außen an der Kunststoffaußenwandung einstückig die Kunststoffspirale 47 angeformt ist. Durch entsprechende Dicke der das Rohr 46 vollständig umgebenden Außenwandung kann die Flexibilität der Kunststoffspirale 47 mit der das Rohr 46 vollständig umgebenden Kunststoffwandung beliebig verändert werden. Durch die wenn auch nur dünne äußere Kunststoffwandung wird das Rohr 46 vollständig mit Kunststoff beschichtet, und zwar auch zwischen den Gängen der Windung 53. Das führt zu einem vollständig gegen äußere Einflüsse geschützten Rohr 46 oder einem sonstigen von der Kunststoffspirale 47 mit durchgehendem inneren Kunststoffrohr oder Schlauch umgebenden Gegenstand.

**Bezugszeichenliste:**

| | | | |
|---|---|---|---|
| 10 | Kunststoffrohr | 37 | Pultrusionsrichtung |
| 11 | Windung | 38 | Eintrittsfläche |
| 12 | Längsmittelachse | 39 | Längsmittelachse |
| 13 | Stirnfläche | 40 | Strang |
| 14 | Stirnfläche | 41 | Materialvorrat |
| 15 | Form | 42 | Eintrittsfläche |
| 16 | Greifer | 43 | Austrittsfläche |
| 17 | Außenmantelfläche | 44 | Pultrusionsrichtung |
| 18 | Innenmantelfläche | 45 | Verbindung |
| 19 | Formhohlraum | 46 | Rohr |
| 20 | Eintrittsfläche | 47 | Kunststoffspirale |
| 21 | Pultrusionsrichtung | 48 | Stirnfläche |
| 22 | Austrittsfläche | 49 | Stirnfläche |
| 23 | Greiferteil | 50 | Nut |
| 24 | Greiferteil | 51 | Innenmantelfläche |
| 25 | Rohr | 52 | Außenmantelfläche |
| 26 | Kunststoffspirale | 53 | Windung |
| 27 | Mantelfläche | 54 | Form |
| 28 | Windung | 55 | Längsmittelachse |
| 29 | Stirnfläche | 56 | Pultrusionsrichtung |
| 30 | Stirnfläche | 57 | Greifer |
| 31 | Abstandshalterstreifen | 58 | Austrittsfläche |
| 32 | Form | 59 | Anfangsfläche |
| 33 | Greifer | 60 | Steigungsrichtung |
| 34 | Kavität | 61 | vornliegende Fläche |
| 35 | Außenmantelfläche | 62 | Ausschnitt |
| 36 | Innenmantelfläche | 63 | Eintrittsfläche |

## Patentansprüche

1. Verfahren zur Herstellung eines verstärkten Kunststoffgegenstands, wobei eine durchgehende Verstärkung aus Strängen (40), Gewebe und/oder dergleichen durch eine Form (15) geführt und in der Form (15) in Kunststoff eingebettet und die Form (15) periodisch relativ zum, vorzugsweise stillstehenden, Kunststoffgegenstand bewegt wird, wobei ein Teil des gekrümmten Kunststoffgegenstands zusammen mit der Form (15) zur Bildung des Kunststoffgegenstands beiträgt, **dadurch gekennzeichnet, dass** ein rohrförmiger Kunststoffgegenstand (10) aus mehreren wendelartigen bzw. spiralartigen aneinandergereihten Windungen (11) gebildet wird.

2. Verfahren nach Anspruch 1, **dadurch gekennzeichnet, dass** eine bereits geformte (vorausgehende) Windung (11) zusammen mit der Form (15) die Folgewindung ausbildet.

3. Verfahren nach Anspruch 1 oder 2, **dadurch gekennzeichnet, dass** eine Folgewindung des Kunststoffgegenstands fortlaufend mit einer vorausgehenden Windung (11) desselben Kunststoffgegenstands zusammengefügt, insbesondere zusammengeklebt wird.

4. Verfahren nach einem der vorhergehenden Ansprüche, **dadurch gekennzeichnet, dass** die Form (15) relativ auf einem Teil der vorausgehenden Windung (11) und der Folgewindung des Kunststoffgegenstands bewegt wird.

5. Verfahren nach einem der vorhergehenden Ansprüche, **dadurch gekennzeichnet, dass** die Achse der spiralförmigen Windungen (11) mit einer Längsmittelachse (12) des rohrförmigen Kunststoffgegenstands (10) zusammenfällt.

6. Verfahren nach einem der vorhergehenden Ansprüche, **dadurch gekennzeichnet, dass** der Kunststoffgegenstand relativ zu dem Materialvorrat bewegt wird.

7. Verfahren nach einem der vorhergehenden Ansprüche, **dadurch gekennzeichnet, dass** die Form (15) diskontinuierlich bzw. schrittweise hin- und herbewegt wird, wobei während einer Rückwärtsbewegung der Form (15) gegen die Pultrusionsrichtung (21) eine Relativbewegung der Form (15) zum Kunststoffgegenstand stattfindet.

## Claims

1. A method for producing a reinforced plastics article, wherein a continuous reinforcement composed of strands (40), fabric and/or the like is guided through a mould (15) and, in the mould (15), is embedded in plastic, and the mould (15) is periodically moved relative to the preferably static plastics article, wherein a part of the curved plastics article contributes, together with the mould (15), to the formation of the plastics article **characterized in that** a pipe-shaped plastics article (10) is formed from multiple windings (11) lined up in coiled or spiral fashion.

2. The method as claimed in claim 1, **characterized in that** an already formed (preceding) winding (11) serves, together with the mould (15), for forming the subsequent winding.

3. The method as claimed in claim 1 or 2, **characterized in that** a subsequent winding of the plastics article is joined, in particular adhesively bonded, in continuous fashion to a preceding winding (11) of the same plastics article.

4. The method as claimed in one of the preceding claims, **characterized in that** the mould (15) performs a relative movement on a part of the preceding winding (11) and of the subsequent winding of the plastics article.

5. The method as claimed in one of the preceding claims, **characterized in that** the axis of the spiral-shaped windings (11) coincides with a longitudinal central axis (12) of the pipe-shaped plastics article (10).

6. The method as claimed in one of the preceding claims, **characterized in that** the plastics article is moved relative to the material supply.

7. The method as claimed in one of the preceding claims, **characterized in that** the mould (15) is moved back and forth in discontinuous or stepped fashion, wherein, during a backward movement of the mould (15) counter to the pultrusion direction (21), the mould (15) performs a relative movement with respect to the plastics article.

## Revendications

1. Procédé pour fabriquer un objet en plastique renforcé, dans lequel un renforcement continu constitué de brins (40), de tissus et/ou similaires est guidé à travers un moule (15) et est noyé dans du plastique dans le moule (15) et le moule (15) est déplacé périodiquement par rapport à l'objet en plastique, de préférence immobile, une partie de l'objet en plastique courbe, conjointement avec le moule (15), contribuant à la formation de l'objet en plastique, **caractérisé en ce qu'**un objet en plastique de forme tubulaire (10) est formé à partir de plusieurs enroulements (11) en rangées successives de forme hélicoïdale ou en spirale.

2. Procédé selon la revendication 1, **caractérisé en ce qu'**un enroulement (précédent) (11) déjà formé, conjointement avec le moule (15), constitue l'enroulement suivant.

3. Procédé selon la revendication 1 ou 2, **caractérisé en ce qu'**un enroulement suivant de l'objet en plastique est assemblé en continu, en particulier est collé, avec un enroulement précédent (11) du même objet en plastique.

4. Procédé selon l'une quelconque des revendications précédentes, **caractérisé en ce que** le moule (15) est déplacé par rapport à une partie de l'enroulement précédent (11) et de l'enroulement suivant de l'objet en plastique.

5. Procédé selon l'une quelconque des revendications précédentes, **caractérisé en ce que** l'axe des enroulements en spirale (11) coïncide avec un axe médian longitudinal (12) de l'objet en plastique tubulaire (10).

6. Procédé selon l'une quelconque des revendications précédentes, **caractérisé en ce que** l'objet en plastique est déplacé par rapport au stock de matériau.

7. Procédé selon l'une quelconque des revendications précédentes, **caractérisé en ce que** le moule (15) est déplacé d'avant en arrière de manière discontinue ou pas à pas, un mouvement relatif du moule (15) par rapport à l'objet en plastique se produisant pendant un mouvement vers l'arrière du moule (15) à l'encontre de la direction de pultrusion (21).
